# EUROPEAN PATENT SPECIFICATION

(11) **EP 0 663 791 B1**
(45) Date of publication and mention of the grant of the patent: **28.01.1998**
(21) Application number: 93922107.3
(22) Date of filing: 08.09.1993
(51) Int. Cl.: A01G 9/14

(54) **DEVICE FOR MOVING OF GROWING TROUGHS IN A GROWING PLANT**
VORRICHTUNG ZUR FÖRDERUNG VON ZUCHTBEHÄLTER IN EINEM GARTENBAUBETRIEB
DISPOSITIF DESTINE A DEPLACER DES BACS DE CULTURE DANS UNE INSTALLATION D'HORTICULTURE

(30) Priority: 25.09.1992 SE 9202764
(43) Date of publication of application: 26.07.1995
(73) Proprietor: SWEDEPONIC HOLDING AB, 474 22 Ellös (SE)
(72) Inventor: RASIN, Bengt, S-611 31 Nyköping (SE)
(74) Representative: Wärulf, Olov
(86) International application number: SE9300728
(87) International publication number: WO9407354

(56) References cited:
- NO-B- 153 387

## Description

### TECHNICAL FIELD

The present invention concerns a device for moving of growing troughs in a growing plant for seedlings, at which the growing plant includes a longish growing line, showing an infeed end and an outfeed end, which shows parallel carrying members extending in the longitudinal direction of the growing line and carrying growing troughs, extending at right angels to the longitudinal direction of the growing line during their moving along the line, at which the relative distance between the growing troughs is encreased stepwise during the moving to admit an encreasing space for the seedlings during their growth and moving along the growing line.

### BACKGROUND TECHNICS

The Swiss patent publication CH-A5-612 822 describes plants according to the preamble, in which growing troughs are moved between sections on a growing bed, at which the relative distance between the growing troughs in each section is increased in a direction from a infeed end to an outfeed end. The relative distance between two growing troughs within each section is constant. Also a plant is described for a continuous encrease of the distances between the growing troughs along the bed.

The American patent publication US-A-4 216 618 describes a plant for growing of seedlings, at which the relative distance between the growing troughs is succesively increased from an infeed end to an outfeed end. The encreasing distance between the growing troughs is brought about by means of a screw extending along the growing bed showing an increasing pitch of thread to an outfeed end.

### DESCRIPTION OF THE INVENTION

The purpose with the present invention is to bring about a device for moving of growing troughs in a growing plant for seedlings leading to lower investment costs and higher reliability than what is present at up to now known plants. The device according to the invention includes a longish growing line, showing an infeed and an outfeed end, and showing carrying members extending in the longitudinal direction of the growing line and carrying growing troughs, extending mainly at right angles to the longitudinal direction of the growing line, during their moving along the growing line. The relative distance between the growing troughs is increased stepwise during the moving, so that a distance between adjacent growing troughs within the first section of the growing line is lesser than a distance between growing troughs in a subsequent second section of the growing line. The distance between the growing troughs can be increased stepwise in eventually subsequent sections of the growing line.

The device according to the invention is characterized in that the moving device includes one or more longitudinally displacable draw bars showing finger members arranged along each draw bar, that each draw bar includes two or more partial draw bars connected by connecting means, by which a first partial draw bar is connected to a second partial draw bar, which in its turn can be connected to a third partial draw bar and so on, at which two connected partial draw bars are axially movable relatively by the connecting means. Preferably each draw bar is turnable around its longitudinal axis between a pulling position, in wich the fingers are engaged with the growing troughs, and a return position, in which the draw bars and also the fingers can be turned out of engagement with the growing troughs. The distance between the fingers on the first partial draw bar is less than the distance between the fingers on the second partial draw bar. The distance between the fingers is encreased at eventually subsequent partial draw bars.

The connecting means preferably includes a first connecting member, which is firmly arranged on the first partial draw bar, and a second connecting member, which is firmly arranged on the second partial draw bar. One or more transferring members for pulling forces are axially displaceable relative to the first connecting means and firmly connected to the second connecting member. The transferring members for pulling forces transfer a pulling force from the second partial draw bar to the first partial draw bar in the pulling position after an axial free movement a certain distance corresponding the difference in the relative distance between fingers on the first partial draw bar and the second partial draw bar. The connecting members transfer a pushing force in the return position from the second partial draw bar to the first partial draw bar.

Other features and details will be clear from the description to drawings below and the claims.

### DESCRIPTION TO DRAWINGS

The invention is described below as an embodiment to the enclosed drawings.

Figure 1 shows schematically a growing plant for seedlings as a longish line seen from one side.

Figure 2 shows the growing plant according to figure 1 seen from above.

Figure 3 shows a magnified cross section of the growing plant along the line A-A in figure 2.

Figure 4 shows a section of the growing plant in a view along the line B-B in figure 2.

Figure 5 shows another part of the growing plant in a view anlong the line C-C in figure 2.

Figure 6 shows a view of the part accordning to figure 5 in a view along the line D-D in figure 5.

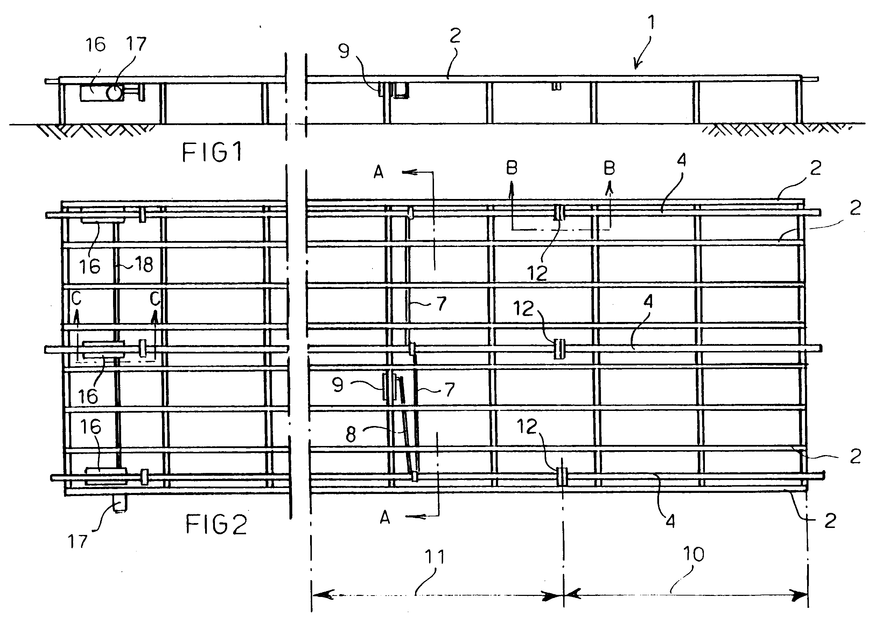

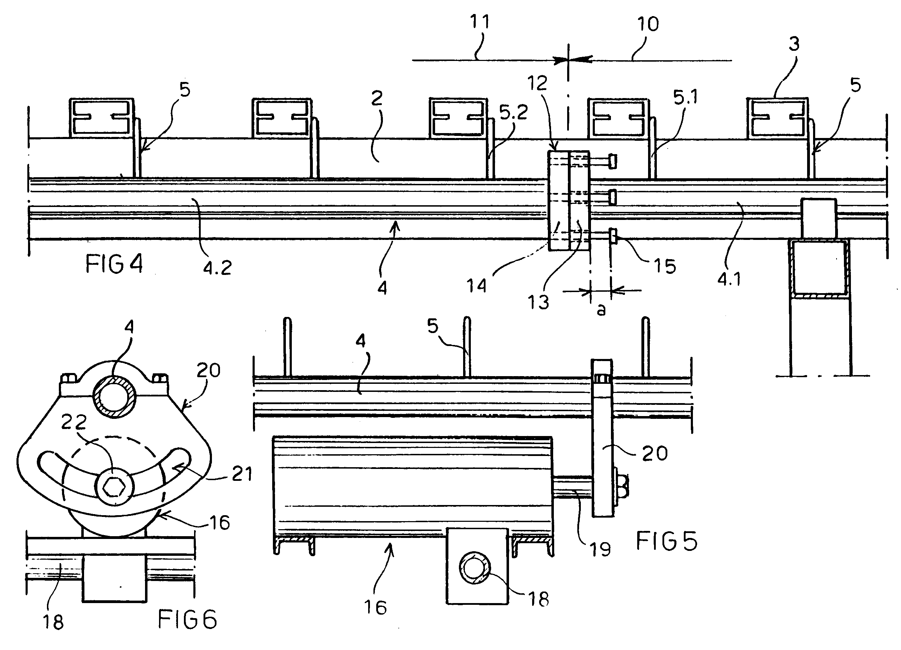

A growing plant for seedlings as shown in figure 1 and 2 includes a longish line 1 showing a number of parallel rails 2 situated in a distance from each other. Growing troughs, shown in cross sections in figure 4, for seedlings, which however are not shown in the figures, carry growing pots and are arranged on the rails 2 extending across all of the growing line 1. The growing troughs 3 are succesively moved from an infeed station, situated on the right side of the growing line 1 in figure 1 and 2, to an outfeed station situated a the left side of the growing line 1 in figure 1 and 2. The moving of the growing troughs 3 is made by means of draw bars 4, which in the example shown extend along all of the growing line 1 at the sides and centre of the same. Each draw bar 4 shows fingers 5 along its extension, which are projecting as shown in figure 4. The growing troughs 3 are moved along the growing line 1 in that the fingers 5 are brought in contact with the growing troughs 3, after which the draw bars 4 on the same time are pulled against the outfeed station of the plant. As growing troughs 3 are removed at the outfeed station new growing troughs 3 are fed at the infeed station. Removing and feeding also can be done in batches.

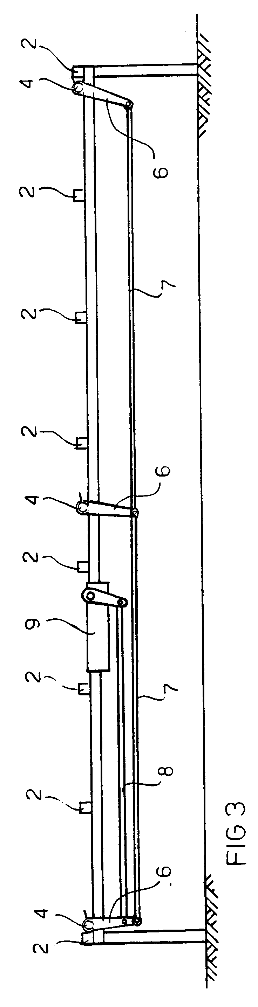

The fingers 5 are turned between a pulling position, in which the fingers 5 are engaged with the growing troughs 3, and a return position, in which the draw bars 4 and the fingers 5 are turned out of engagement with the growing troughs 3. This made as shown in figure 3 by means of levers 6 arranged on the draw bars 4 and mutually connected by connecting bars 7. One of the levers 6 is connected with a operating bar 8, which in its turn is connected with a force making operating means 9. When the operating means 9 is activated the operating bar 8 makes a lever 6 on one draw bar 4 to turn and by that also turn the other levers 6 on the other draw bars 4 through the connecting bars 7.

The growing line 1 shown in the figures shows a section where the distance between adjacent growing troughs 3 in a first section 10, situated next to the infeed station, is less than in a second subsequent section 11. The distance between the growing troughs 3 after that can be increased in a third, a fourth section and so on to the outfeed station. In a transfer area between the sections, e.g. between the first section 10 and the second section 11, as shown in detail in figure 4, the draw bars 4 are mutually and axially displaceable through connecting means 12. Each connecting means 12 includes a first flange 13 firmly arranged on a first partial draw bar 4.1 in the first section 10 and a second flange 14 firmly arranged on a joining second partial draw bar 4.2 in the second section. A number of bolts 15 provided with heads extend axially with a clearance through holes in the first flange 13 and are axially screwed in threaded holes in the second flange 14. When a second partial draw bar 4.2 is subject to a pulling force this is displaced to the left in figure 4 bringing growing troughs 3 in the second section 11 through projecting fingers 5 on the second partial draw bar 4.2 whithout affecting the first partial draw bar 4.1. Just as the heads of the bolts 15 are brought in contact with the first flange 13 the pulling force in the second partial draw bar 4.2 will be transferred to the first partial draw bar 4.1 making this to displace carrying growing troughs 3 on the first section 10.

As the connecting means 12 is in a closed position as shown in figure 4 the bolts 15 project from the first flange making a clearance (a) between the first flange 13 and the heads of the bolts 15. The distance between a first finger 5.1 on the first partial draw bar 4.1 and a second finger 5.2 on the second partial draw bar 4.2 next to the connecting means 12 in this position is the same as the distance between the fingers 5 on the first partial draw bar 4.1. As the connecting means 12 by pulling the second partial draw bar 4.2 is pulled apart the distance between the first finger 5.1 and the second finger 5.2 is increased to a distance which is the same as the distance between the fingers 5 on the second partial draw bar 4.2. The distance between two subsequent growing troughs 3 is thus increased at the passing of the connecting means 12. This is repeated also at passing of more connecting means to make an increased space for growing between the growing troughs 3 along the extension of the growing line 1.

The pulling in of each draw bar 4 is achieved by means of a jack 16 situated near the outfeed station of the growing line 1. In the shown example all jacks 16 are constituted by screw jacks which are actuated by an electrical motor 17 by a common driving shaft 18. As the motor 17 is activated a plunger 19 on the jack 16 is made to move axially in the longitudinal direction of the draw bar 4 and by means of a transferring member 20 arranged on the draw bar 4 pull apart or push together the connecting means 12. The transferring member 20 is constituted by a sector-shaped disc, showing a gap 21 in the shape of a part of a circle in which the plunger 19 is inserted and slideable guided by means of a washer 22 screwed at the end of the plunger 19. At a pulling in the draw bar 4 the fingers 5 are in a turned-up position making the growing troughs 3 to be displaced along the growing line 1. At a pulling back of the draw bar 4 to the start position the fingers 5 are in a turned-down position making them to pass below the growing troughs 3 without effecting the same.

## Claims

1. Device for moving of growing troughs in a growing plant for seedlings, at which the growing plant includes a longish growing line (1), showing an infeed end and an outfeed end, and showing carrying members (2) extending in the longitudinal direction of the growing line (1) and carrying growing troughs (3), extending mainly at right angles to the longitudinal direction of the growing line (1), during their moving along the growing line (1), **characterized** in that the moving device includes one or more draw bars (4) displacable in their longitudinal direction showing fingers (5) arranged below each draw bar (4), that each draw bar (4) includes two or more partial draw bars (4.1, 4.2) connected together by connecting means (12), by which a first partial draw bar (4.1) is connected to a second partial draw bar (4.2), which in its turn can be connected to a third partial draw bar and so on, and that two connected partial draw bars (4.1, 4.2) are axially and mutually displaceable through the connecting means (12).

2. Device according to claim 1, **characterized** in that the distance between the fingers (5) on the first partial draw bar (4.1) is less than the distance between the fingers (5) on the second partial draw bar, and that the distance between fingers (5) are increasing at eventually subsequent partial draw bars, whereby the internal distance between the growing troughs (3) is stepwise increasing during the moving.

3. Device according to claim 1 or 2, **characterized** in that each draw bar (4) is turnable around its longitudinal axis between a pulling position, in which the fingers (5) are in connection with the growing troughs (3), and a return position, in which the draw bars (4) and also the fingers (5) are turned out of connection with the growing troughs.

4. Device according to claim 3, **characterized** in that the connecting means (12) includes a first connecting member (13), firmly arranged on the first partial draw bar (4.1), and a second connecting member (14), firmly arranged on the second partial draw bar (4.2), that one or more force-transferring members (15) are axially displaceable relative to the first connecting member (13) and firmly connected to the second connecting member (14), and that the force-transferring members (15) transfer a pulling force in the pulling position from the second partial draw bar (4.2) to the first partial draw bar (4.1) after an axial movement with a clearance of a certain distance (a) corresponding to the difference in relative distances between fingers (5) on the first partial draw bar (4.1) and the second partial draw bar (4.2), and that the connecting members (13, 14) transfer a pulling force in the return position from the second partial draw bar (4.2) to the first partial draw bar (4.1).

5. Device according to claim 4, **characterized** in that the first connecting member (13) and the second connecting member (14) are constituted by flanges, and that the pulling force-transferring members (15) are constituted by bolts provided with heads which are axially movable in holes in the first connecting member (13) and firmly connected to and axially projecting from the second connecting member (14).

6. Device according to any of the claims 1-5, **characterized** in that the draw bars (4) are turned around their longitudinal axis by means of a lever (6) arranged on each draw bar (4), which levers (6) are relatively connected by connecting bars (7), and that at least one lever (6) is connected to a first force making operating means (9).

7. Device according to any of the claims 1-6, **characterized** in that the draw bars (4) are axially displaced in the pulling position respectively in the return position by means of at least a second force making means (16), which is in connection with each draw bar (4) at the outfeed end of the growing line (1) by a transferring member (20), which is firmly connected to each draw bar (4).

8. Device according to claim 7, **characterized** in that the second force making means (16) is constituted by jacks which are relatively connected through a driving shaft (18) actuated by a driving motor (17).

## Patentansprüche

1. Vorrichtung zum Bewegen von Anbauwannen in einer Anbauanlage für Keimpflanzen, wobei die Anbauanlage eine längliche Anbaureihe (1) aufweist, die ein Beschickungsende und ein Austragende hat und Tragelemente (2) aufweist, die sich in der Längsrichtung der Kulturreihe (1) erstrecken und Kulturwannen (3) tragen, die sich während ihrer Bewegung entlang der Kulturreihe (1) hauptsächlich rechtwinklig zu der Längsrichtung der Kulturreihe (1) erstrecken, **dadurch gekennzeichnet,** daß die Bewegungsvorrichtung ein oder mehr in ihrer Längsrichtung verlagerbare Zugstangen (4) aufweist, die Finger (5) haben, die unter jeder Zugstange (4) angeordnet sind, daß jede Zugstange (4) zwei oder mehr Teil-Zugstangen (4.1, 4.2) aufweist, die durch eine Verbindungseinrichtung (12) miteinander verbunden sind, durch die eine erste Teil-Zugstange (4.1) mit einer zweiten Teil-Zugstange (4.2) verbunden ist, die ihrerseits mit einer dritten Teil-Zugstange verbunden werden kann, usw. und daß zwei miteinander verbundene Teil-Zugstangen (4.1, 4.2) durch die Verbindungseinrichtung (12) axial und gegenseitig verlagerbar sind.

2. Vorrichtung nach Anspruch 1, **dadurch gekennzeichnet,** daß der Abstand zwischen den Fingern (5) an der ersten Teil-Zugstange (4.1) kleiner als der Abstand zwischen den Fingern (5) an der zweiten Teil-Zugstange ist und daß der Abstand zwischen Fingern (5) bei gegebenenfalls nachfolgenden Teil-Zugstangen zunimmt, so daß der innere Abstand zwischen den Kulturwannen (3) während der Bewegung schrittweise größer wird.

3. Vorrichtung nach Anspruch 1 oder 2, **dadurch gekennzeichnet,** daß jede Zugstange (4) um ihre Längsachse zwischen einer Ziehposition, in der die Finger (5) mit den Kulturwannen (3) in Verbindung sind, und einer Rückstellposition drehbar ist, in der die Zugstangen (4) und auch die Finger (5) außer Verbindung mit den Kulturwannen geschwenkt sind.

4. Vorrichtung nach Anspruch 3, **dadurch gekennzeichnet,** daß die Verbindungseinrichtung (12) ein erstes Verbindungselement (13), das an der ersten Teil-Zugstange (4.1) fest angeordnet ist, und ein zweites Verbindungselement (14) hat, das an der zweiten Teil-Zugstange (4.2) fest angeordnet ist, daß ein oder mehr Kraftübertragungselemente (15) relativ zu dem ersten Verbindungselement (13) in Axialrichtung verlagerbar und mit dem zweiten Verbindungselement (14) fest verbunden sind und daß die Kraftübertragungselemente (15) nach einer Axialbewegung eine Zugkraft in die Ziehposition von der zweiten Teil-Zugstange (4.2) zu der ersten Teil-Zugstange (4.1) übertragen, wobei ein Spiel mit einem bestimmten Abstand (a) der Differenz der relativen Abstände zwischen Fingern (5) an der ersten Teil-Zugstange (4.1) und der zweiten Teil-Zugstange (4.2) entspricht, und daß die Verbindungselemente (13, 14) eine Zugkraft in die Rückstellposition von der zweiten Teil-Zugstange (4.2) zu der ersten Teil-Zugstange (4.1) übertragen.

5. Vorrichtung nach Anspruch 4, **dadurch gekennzeichnet,** daß das erste Verbindungselement (13) und das zweite Verbindungselement (14) aus Flanschen bestehen und daß die Zugkraftübertragungselemente (15) aus Bolzen mit Köpfen bestehen, die in Löchern in dem ersten Verbindungselement (13) axial bewegbar sind und mit dem zweiten Verbindungselement (14) fest verbunden sind und in Axialrichtung davon vorstehen.

6. Vorrichtung nach einem der Ansprüche 1-5, **dadurch gekennzeichnet,** daß die Zugstangen (4) durch einen Hebel (6), der an jeder Zugstange (4) angeordnet ist, um ihre Längsachse gedreht werden, wobei die Hebel (6) durch Verbindungsstangen (7) relativ miteinander verbunden sind, und daß wenigstens ein Hebel (6) mit einer ersten Kraft erzeugenden Betätigungseinrichtung (9) verbunden ist.

7. Vorrichtung nach einem der Ansprüche 1-6, **dadurch gekennzeichnet,** daß die Zugstangen in die Ziehposition bzw. die Rückstellposition in Axialrichtung durch wenigstens eine zweite Kraft erzeugende Einrichtung (16) verlagert werden, die mit jeder Zugstange (4) an dem Austragende der Kulturreihe (1) durch ein Übertragungselement (20) in Verbindung ist, das mit jeder Zugstange (4) fest verbunden ist.

8. Vorrichtung nach Anspruch 7, **dadurch gekennzeichnet,** daß die zweite Kraft erzeugende Einrichtung (16) aus Hebeeinheiten besteht, die durch eine von einem Antriebsmotor (17) betätigte Antriebswelle (18) relativ miteinander verbunden sind.

## Revendications

1. Dispositif destiné à déplacer des bacs de culture dans une installation de culture de jeunes plants, où l'installation de culture comprend une chaîne de culture allongée (1), présentant une extrémité de chargement et une extrémité de déchargement, et comportant des éléments porteurs (2) s'étendant dans la direction longitudinale de la chaîne de culture (1) et supportant des bacs de culture (3) qui s'étendent principalement à angle droit par rapport à la direction longitudinale de la chaîne de culture (1) durant leur déplacement le long de la chaîne de culture (1), caractérisé en ce que le dispositif de déplacement comprend une ou plusieurs tiges de traction (4), pouvant être déplacées dans leur direction longitudinale, qui présentent des ergots (5) disposés le long de chaque tige de traction (4), en ce que chaque tige de traction (4) comprend deux ou plusieurs tiges de traction partielles (4.1, 4.2) reliées les unes aux autres par un moyen de liaison (12), par lequel une première tige de traction partielle (4.1) est reliée à une seconde tige de traction partielle (4.2), qui peut à son tour être reliée à une troisième tige de traction partielle, etc.., et en ce que deux tiges de traction partielles reliées (4.1, 4.2) peuvent être déplacées axialement et réciproquement par l'intermédiaire du moyen de liaison (12).

2. Dispositif selon la revendication 1, caractérisé en ce que la distance séparant les ergots (5) présents sur la première tige de traction partielle (4.1) est inférieure à la distance séparant les ergots (5) présents sur la seconde barre partielle, et en ce que la distance entre les ergots (5) va en augmentant au niveau des tiges de traction partielles qui les suivent éventuellement, grâce à quoi l'écartement entre les bacs de culture (3) augmente progressivement durant leur déplacement.

3. Dispositif selon la revendication 1 ou 2, caractérisé en ce que chaque tige de traction (4) peut être tournée autour de son axe longitudinal entre une position de traction, dans laquelle les ergots (5) sont en contact avec les bacs de culture (3), et une position de retour, dans laquelle les tiges de traction (4) ainsi que les ergots (5) sont tournés hors de contact avec les bacs de culture.

4. Dispositif selon la revendication 3, caractérisé en ce que le moyen de liaison (12) comprend un premier élément de liaison (13), disposé rigidement sur la première tige de traction partielle (4.1), et un second élément de liaison (14), disposé rigidement sur la seconde tige de traction partielle (4.2), en ce qu'un ou plusieurs éléments de transfert de force (15) peuvent être déplacés axialement par rapport au premier élément de liaison (13) et sont reliés rigidement au second élément de liaison (14), et en ce que les éléments de transfert de force (15) transfèrent une force de traction, dans la position de traction, depuis la seconde tige de traction partielle (4.2) jusqu'à la première tige de traction partielle (4.1) à l'issue d'un déplacement axial accompagné d'un jeu d'une certaine longueur (a) correspondant à la différence des distances relatives entre les ergots (5) présents sur la première tige de traction partielle (4.1) et sur la seconde tige de traction partielle (4.2), et en ce que les éléments de liaison (13, 14) transfèrent une force de traction, dans la position de retour, depuis la seconde tige de traction partielle (4.2) jusqu'à la première tige de traction partielle (4.1).

5. Dispositif selon la revendication 4, caractérisé en ce que le premier élément de liaison (13) et le second élément de liaison (14) sont constitués par des brides, et en ce que les éléments de transfert de force de traction (15) sont constitués par des boulons munis de têtes qui peuvent être déplacés axialement dans des trous ménagés dans le premier élément de liaison (13) et reliés rigidement au second élément de liaison (14) et faisant saillie axialement de celui-ci.

6. Dispositif selon l'une quelconque des revendications 1 à 5, caractérisé en ce que les tiges de traction (4) sont tournées autour de leur axe longitudinal au moyen d'un levier (6) disposé sur chaque tige de traction (4), lesquels leviers (6) sont reliés les uns aux autres par des barres de liaison (7), et en ce qu'au moins un levier (6) est relié à un premier moyen de commande d'application de force (9).

7. Dispositif selon l'une quelconque des revendications 1 à 6, caractérisé en ce que les tiges de traction (4) sont déplacées axialement, dans la position de traction, ou respectivement dans la position de retour, à l'aide d'au moins un second moyen d'application de force (16), qui est relié à chaque tige de traction (4) au niveau de l'extrémité de déchargement de la chaîne de culture (1), par un élément de transfert (20) qui est relié rigidement à chaque tige de traction (4).

8. Dispositif selon la revendication 7, caractérisé en ce que le second moyen d'application de force (16) est constitué par des vérins qui sont reliés les uns aux autres par l'intermédiaire d'un arbre de commande (18) mû par un moteur d'entraînement (17).
